# EUROPEAN PATENT APPLICATION

(11) **EP 4 534 333 A1**
(43) Date of publication of application: **09.04.2025**
(21) Application number: 23812188.3
(22) Date of filing: 26.05.2023
(51) Int. Cl.: B60L 53/30, B60L 53/66, B60L 53/53, H04W 4/80

(54) **BATTERY SWAPPING STATION**

(30) Priority: 27.05.2022 KR 20220065240
(71) Applicant: LG Energy Solution, Ltd., Seoul 07335 (KR)
(72) Inventor: LEE, Ye Seul, Daejeon 34122 (KR); YANG, Seong Yeol, Daejeon 34122 (KR)
(74) Representative: Goddar, Heinz J.
(86) International application number: PCT/KR2023/007229
(87) International publication number: WO 2023/229414

(57) **Abstract**

The present application is capable of providing a battery swapping station (BSS) and a method of using the same. The present application is capable of providing a battery swapping station and a method of using the same in which the problems of communication errors caused by frequent battery replacement in a battery swapping station or the like or an emergency state can be solved by applying two types of wireless communication means using different frequency bands, and accurate and efficient confirmation and handling of the information on the emergency state are enabled.

## Description

### Technical Field

This application claims the benefit of priority based on Korean Patent Application No. 10-2022-0065240, dated May 27, 2022, the disclosure of which is incorporated herein in its entirety by reference.

This application relates to a battery swapping station and a method of using the same.

### Background

Electric drive means refers to drive means that uses a battery such as a secondary battery as a drive energy source, and representative examples of the electric drive means include an electric vehicle and an electric two-wheeled vehicles such as an e-scooter.

In using the electric drive means, efficiently charging the battery is an important issue. For example, in a case where there is no charging station nearby when urgent movement is required, or in a case where charging takes a long time even when there is a charging station, the efficiency of using the electric drive means is reduced.

One of the means proposed in consideration of these issues is a so-called battery swapping station (BSS). A battery swapping station refers to a system designed to allow a user of electric drive means to replace a discharged battery with a charged battery. Currently, battery replacement is mainly applied to relatively simple devices such as electric two-wheeled vehicles, but the scope of application is expected to expand in the future.

The battery swapping station includes a plurality of charging stations capable of charging individual batteries, respectively, and a communication terminal exists in each individual charging station to perform communication regarding battery state information.

**In** the case of a currently known battery swapping station, there is a problem in that communication errors are caused frequent failure or malfunction of the communication terminals due to frequent replacement of batteries. **In** addition, there is also a problem in that communication error problems are also caused when a problem such as abnormal ignition of a battery occurs during, for example, a battery charging process, limiting the use.

### Summary of the Invention

### Problem to be Solved

An object of this application provides a battery swapping station (BSS) and a method of using the same.

An object of this application provides a battery swapping station and a method of using the same in which communication error problems caused by frequent battery replacement in a battery swapping station or caused by an emergency state can be solved by applying two types of wireless communication means using different frequency bands, and accurate and efficient confirmation and handling of the information on the emergency state are enabled.

### Means to Solve the Problem

This application relates to a battery swapping station (BSS).

The battery swapping station of the present application may include: a plurality of charging stations each configured to perform charging of a battery module or battery pack; first wireless communication means installed to communicate with a battery management system of the battery module or battery pack; and second wireless communication means installed to enable data transmission and reception between battery management systems of battery modules or battery packs in the plurality of charging stations.

The first and second wireless communication means have different communication frequency bands. **In** an example, the frequency band of the second wireless communication means may be higher than the communication frequency band of the first wireless communication means.

**In** an example, the first wireless communication means may be a so-called near-field communication means, for example, a contact or non-contact type near-field communication means with a communication frequency band of about 13.56 MHz.

**In** an example, the second wireless communication means may use a communication frequency within the range of 300 GHz to 10 GHz.

**In** the battery swapping station, when the battery module or battery pack is in a normal state, the first wireless communication means may be activated to maintain a communication state with the battery management system (BMS) of the battery module or battery pack. At this time, the second wireless communication means may be controlled to be maintained in an inactive state (e.g., a transmission inactive state) or a reception standby state.

**In** the battery swapping station, when an emergency state occurs in at least one battery module or battery pack, control may be performed such that information on the emergency state is transmitted to the battery management system of another battery module or battery pack by the second wireless communication means.

When the charging station of the battery management system that receives the emergency state information is in the normal state when the emergency state information is transmitted, control may be performed such that the second wireless communication means of the charging station is maintained in an inactive state (e.g., a transmission inactive state) or a reception standby state.

When the charging station of the battery management system that receives the emergency state information is in an emergency state when the emergency state information is transmitted, control may be performed such that the emergency state information is transmitted to the battery system of another charging station by the second wireless communication means of the charging station.

The present application also relates to a method of using a battery swapping station, in which the battery swapping station may include a plurality of charging stations each configured to perform charging of a battery module or battery pack, and first and second wireless communication means having different communication frequency bands.

The battery swapping station may be the above-described battery swapping station.

The using method may include the steps of: communicating with a battery management system of the battery module or battery pack using the first wireless communication means; and controlling the state of the second wireless communication means depending on information on the state of the battery module or battery pack.

The communication frequency band of the second wireless communication means may be higher than the communication frequency band of the first wireless communication means.

**In** the using method, when the battery module or battery pack is in the normal state, the step of maintaining the second wireless communication means in an inactive state (e.g., a transmission inactive state) or a reception standby state may be performed.

**In** the using method, when an emergency state occurs in at least one battery module or battery pack, the step of transmitting information on the emergency state to the battery management system of another battery module or battery pack using the second wireless communication means may be performed.

**In** the using method, when the charging station of the battery management system that receives the emergency state information is in the normal state when the emergency state information is transmitted, the step of maintaining the second wireless communication means of the charging station of the battery management system that receives the emergency state information in an inactive state (e.g., a transmission inactive state) or a reception standby state may be performed.

**In** the using method, when the charging station of the battery management system that receives the emergency state information is in an emergency state when the emergency state information is transmitted, the step of transmitting the emergency state information to the battery management system in another charging station by the second wireless communication means of the charging station of the battery management system that receives the emergency state information may be performed.

### Effect of the Invention

This application is capable of providing a battery swapping station (BSS) and a method of using the same. This application is capable of providing a battery swapping station and a method of using the same in which the problems of communication errors caused by frequent battery replacement in a battery swapping station or the like or an emergency state can be solved by applying two types of wireless communication means using different frequency bands, and accurate and efficient confirmation and handling of the information on the emergency state are enabled.

### Brief Description of the Drawings

FIG. 1 is a view illustrating the configuration of a general battery swapping station.
FIG. 2 is a schematic view illustrating a communication state using near-field communication (NFC) as first wireless communication means.
FIG. 3 is a flowchart explaining the operation state of communication means of a battery swapping station.

### Detailed Description to Execute the Invention

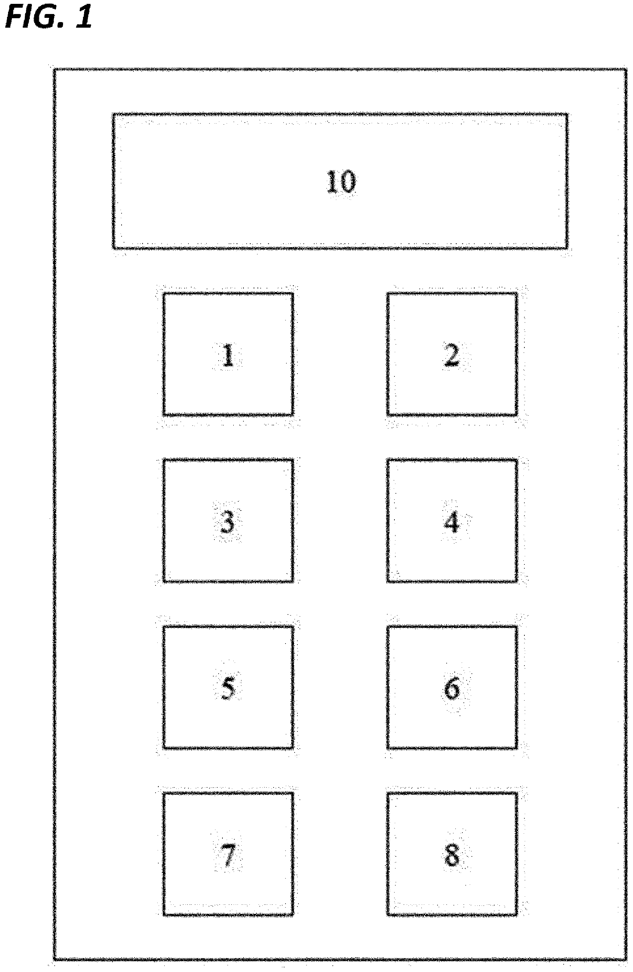

The present application is a battery swapping station (BSS). FIG. 1 is a view illustrating the configuration of a typical battery swapping station. FIG. 1 illustrates the general configuration of a battery swapping station, but the configuration of the battery swapping station applicable to this application is not limited to FIG. 1.

As illustrated in FIG. 1, typically, a battery swapping station may include a plurality of charging stations 1 to 8 installed to perform charging of a battery module or battery pack, and a plurality of charging stations may exist in the battery swapping station. In addition, the battery swapping station may include a display 10 configured to display the battery state of each charging station.

In this battery swapping station, communication means is required to monitor the state of a battery module or battery pack present in each charging station and share information on the state.

In the present application, at least two types of communication means, specifically, two types of wireless communication means with different usage frequency bands, are applied as the communication means.

For example, in the present application, as the communication means for communication with a battery management system (BMS) of a battery module or battery pack in each individual charging station when the battery management system and communication means for data transmission and reception between all of the charging stations, separate communications may be used.

For example, the battery swapping station may include first wireless communication means installed in each individual charging station to be capable of communicating with the battery management system (BMS) of the battery module or battery pack. In the above description, the first wireless communication means may be, for example, a near-field communication (NFC) means. The first wireless communication means may be communication means for communication with the battery management system (BMS) of the battery module or battery pack in each individual charging station.

As is well known, the near-field communication means is a technology for wireless communication at a relatively short distance using about 13.56 MHz, which is generally utilized in services such as transportation, ticketing, and/or payment. This near-field communication means may be utilized in a contact or non-contact type.

**In** the present application, the first wireless communication means may be applied as communication means for communication with the battery management system (BMS) of a battery module or battery pack in each individual charging station to obtain the state of each individual battery module or battery pack.

The method of performing communication in each individual charging station using the first wireless communication means is not particularly limited, and a general communication method may be used.

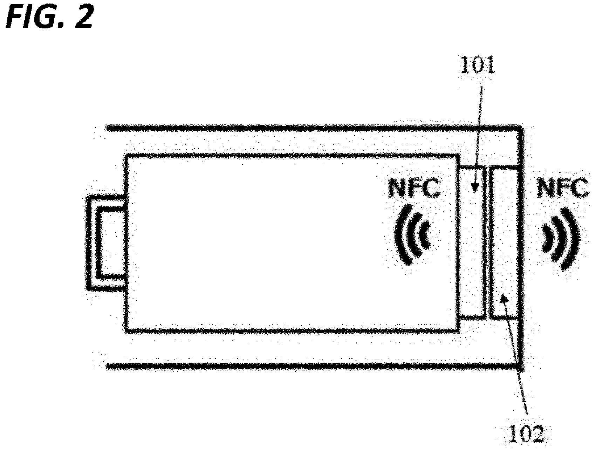

FIG. 2 is a schematic view illustrating a communication state in one of the individual charging stations 1 to 8 of the battery swapping station of FIG. 1.

For example, when the near-field communication means is applied as the first wireless communication means as illustrated in FIG. 2, the communication may be performed by installing a communication chip or transmission/reception means 101 capable of communication in a battery module or battery pack or a battery management system (BMS) of the battery module or battery pack, and installing the same means 102 in the charging station as well.

The battery swapping station of the present application may include second wireless communication means separate from the first wireless communication means, and the second wireless communication means may be used as means for mutually transmitting/receiving state information of battery modules or battery packs in the plurality of charging stations within the battery swapping station.

That is, the second wireless communication means may be installed to enable data transmission and reception between the battery management systems of battery modules or battery packs in the plurality of charging stations of the battery swapping station.

At this time, any communication means may be applicable as the second wireless communication means without particular limitation as long as the communication means is different from the first wireless communication means, but appropriately, second wireless communication means that utilizes a communication frequency of a higher band compared to the first wireless communication means may be applied.

For example, the second wireless communication means may be second wireless communication means that uses a frequency in the band of about 300 MHz to 10 GHz. Examples of such second wireless communication means include but are not limited to, Bluetooth communication means or Wi-Fi communication means using a frequency of about 2.4 GHz band, Wi-Fi communication means using a frequency of about 5 GHz band, and EnOcean communication using a band of about 315 MHz, a band of 868 MHz, a band of 905 MHz, and/or a band of 902 MHz.

**In** the present application, it is possible to provide a battery swapping station suitable for a purpose by controlling the operation methods of the two types of communication means.

For example, when the battery swapping station is in a normal state, the first wireless communication means may be activated and maintained in a communication state with the battery management system (BMS), and the second wireless communication means may be controlled to be maintained in an inactive state or a reception standby state.

**In** the above description, the normal state refers to a state in which an abnormal state does not occur in a battery module or battery pack before, during, or after charging of the battery module or battery pack, and in the above description, the abnormal state includes an abnormal state such as generation of abnormally high temperature or heat, overcharging, or ignition in a battery module or battery pack.

Meanwhile, in the battery swapping station, when an emergency state occurs in at least one battery module or battery pack, control may be performed such that information on the emergency state is transmitted to the battery management system of another battery module or battery pack by the second wireless communication means.

**In** the above description, the emergency state refers to a state in which an abnormal state occurs in a battery module or battery pack before, during, or after charging of the battery module or battery pack, and in the above description, the abnormal state includes an abnormal state such as generation of abnormally high temperature or heat, overcharging, or ignition in a battery module or battery pack.

**In** the battery swapping station, when the battery management system in another charging station transmits the emergency state information of the charging station where the emergency state occurs, the operation of the communication means may also be controlled depending on the state of the battery management system that receives the emergency state information.

For example, when the charging station of the battery management system that receives the emergency state information is in the normal state, the second wireless communication means of the charging station may be controlled to be maintained in an inactive state or a reception standby state. At this time, the communication state of the first wireless communication means of the charging station with the battery management system in the corresponding charging station may be maintained in the active state.

**In** addition, when the charging station of the battery management system that receives the emergency state information is in an emergency state, the transmission state of the second wireless communication means of the charging station may be activated, and the information on the emergency state may be transmitted to the battery management system in another charging station by the activated second wireless communication means.

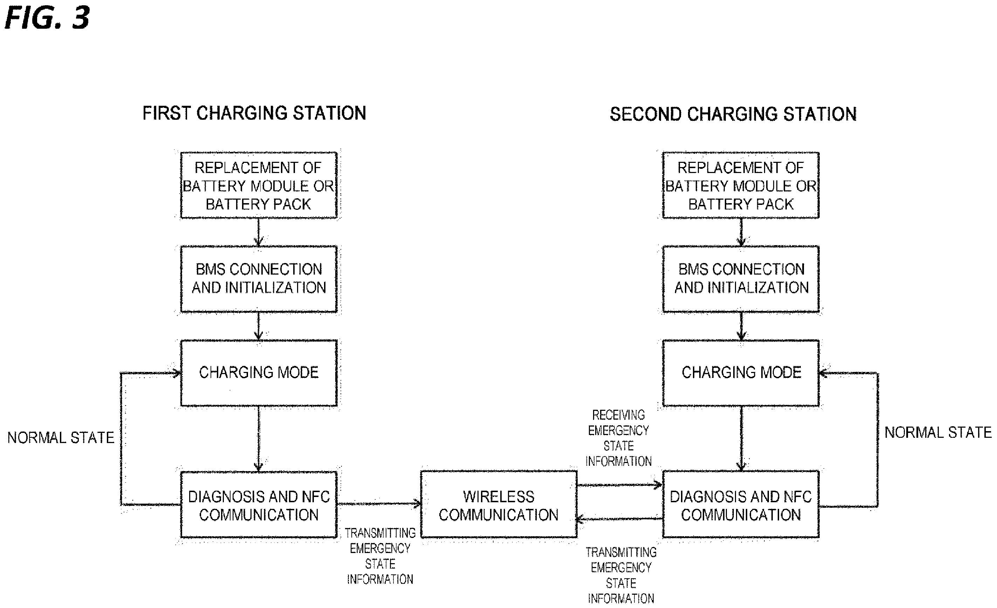

FIG. 3 is a flowchart for explaining the states of the communication means as described above.

For example, assuming that the battery swapping station is in a use state, a fully charged battery module or battery pack will be replaced with a discharged battery module or battery pack in at least one charging station of the battery swapping station. **In** FIG. 3, it is assumed that replacement is performed in two charging stations (first and second charging stations) of the battery swapping station.

When the battery module or battery pack is replaced as described above, each charging station may perform connection with the battery management system (BMS) and initialization and then proceed to the charging mode. However, all of the charging stations do not necessarily perform the charging mode, and may proceed to other modes such as a standby mode as needed.

**In** the charging mode, the states of the battery modules or packs are diagnosed, and at this time, the first wireless communication means (NFC) is activated in the communication state and is in communication with each individual battery management system. When a battery module or pack is maintained in the normal state where no abnormal state occurs, the charging mode will continue until fully charged. **In** this normal state, the second wireless communication means is maintained in the inactive state or in the reception standby state.

**In** the above situation, when an abnormal state occurs and an emergency station is detected in one of the charging station, transmission of the second wireless communication means is activated. At this time, the transmission states of the first wireless communication means and the second wireless communication means may be activated simultaneously. **In** FIG. 3, it is assumed that an emergency state is detected in the first charging station. When an emergency condition is detected in the first charging station as described above, the second wireless communication means transmits information on the emergency state to another charging station. FIG. 3 illustrates a case where information on the emergency state of the first charging station is transmitted to the second charging station by the second wireless communication means, but the information on the emergency state of the first charging station may be transmitted to at least some or all of the charging stations other than the first charging station in the battery swapping station.

**In** addition, the information transmitted in this way may also be transmitted to an integrated management system.

The operation of the communication means of the second charging station that receives the emergency state information of the first charging station may be adjusted differently depending on the state of the second charging station.

For example, when the second charging station is in the normal state, the first wireless communication means of the second charging station may be controlled to be maintained in the communication state with the battery management system, and the second wireless communication means may be maintained in the reception standby state or the inactive state, or may maintain the inactive state at least in terms of the transmission state.

**In** contrast, when the second charging station is in an emergency state, the transmission states of the first and second wireless communication means of the second charging station may both be activated, and information on the emergency state of the second charging station may be transmitted to another charging station via the second wireless communication means.

**In** the present application, by properly operating the two types of communication means as described above, it is possible to prevent communication error problems even when battery modules or packs are frequently replaced, and when an emergency state occurs, it is possible to effectively and quickly detect the location or degree of occurrence of the emergency state to cope with the emergency state.

The present application also relates to a method of using a battery swapping station.

Specifically, the using method may be a method of using the above-described battery swapping station which includes the plurality of charging stations each configured to perform charging of a battery module or battery pack, the first wireless communication means, and the second wireless communication means.

The detailed description on the using method is as described in the description of the battery swapping station.

Accordingly, the using method may include the steps of: communicating with the battery management system of the battery module or battery pack using the first wireless communication means; and controlling the state of the second wireless communication means depending on the state information of the battery module or battery pack.

**In** the above description, the communication frequency band of the second wireless communication means may be higher than the communication frequency band of the first wireless communication means.

**In** the using method, when the battery module or battery pack is in the normal state, the step of maintaining the second wireless communication means in an inactive state or in a reception standby state may be performed.

**In** the using method, when an emergency state occurs in at least one battery module or battery pack, the step of transmitting information on the emergency state to the battery management system of another battery module or battery pack using the second wireless communication means may be performed.

**In** the using method, when the charging station of the battery management system that receives the emergency state information is in the normal state when the emergency state information is transmitted, the step of maintaining the second wireless communication means of the charging station of the battery management system that receives the emergency state information in an inactive state or a reception standby state may be performed.

In the using method, when the charging station of the battery management system that receives the emergency state information is in an emergency state when the emergency state information is transmitted, the step of transmitting the emergency state information to the battery management system of another charging station by the second wireless communication means of the charging station of the battery management system that receives the emergency state information may be performed.

## Claims

1. A battery swapping station comprising:
a plurality of charging stations each configured to perform charging of a battery module or battery pack;
a first wireless communication unit installed to communicate with a battery management system of the battery module or battery pack; and
a second wireless communication unit installed to enable data transmission and reception between battery management systems in the plurality of charging stations,
wherein the first and second wireless communication means have different communication frequency bands.

2. The battery swapping station of claim 1, wherein the communication frequency band of the second wireless communication means is higher than the communication frequency band of the first wireless communication means.

3. The battery swapping station of claim 1, wherein the first wireless communication means is a non-contact or contact type near-field communication means.

4. The battery swapping station of claim 1, wherein the communication frequency band of the second wireless communication means is within a range of 300 MHz to 10 GHz.

5. The battery swapping station of claim 1, wherein, when the battery module or battery pack is in a normal state, the first wireless communication means is in a communication state with the battery management system, and the second wireless communication means is controlled to be in a transmission inactive state or a reception standby state.

6. The battery swapping station of claim 1, wherein, when at least one battery module or battery pack is in an emergency state, control is performed such that information on the emergency state is transmitted to a battery management system of another charging station by the second wireless communication means.

7. The battery swapping station of claim 6, wherein, when the charging station of the battery management system that receives the information on the emergency state is in a normal state, the second wireless communication means of the charging station is controlled to be maintained in a transmission inactive state or a reception standby state.

8. The battery swapping station of claim 6, wherein, when the charging station of the battery management system that receives the information on the emergency state is in an emergency state, control is performed such that the information on the emergency state is transmitted to a battery management system in another charging station by the second wireless communication means of the charging station.

9. A method of using a battery swapping station including a plurality of charging stations each configured to perform charging of a battery module or battery pack, and including first and second wireless communication means having different communication frequency bands, the method comprising:
communicating with the battery management systems of the charging stations using the first wireless communication means; and
controlling a state of the second wireless communication means according to information on a state of the battery module or battery pack.

10. The method of claim 9, wherein the communication frequency band of the second wireless communication means is higher than the communication frequency band of the first wireless communication means.

11. The method of claim 9, wherein, when the battery module or battery pack is in a normal state, the second wireless communication means is maintained in a transmission inactive state or a reception standby state.

12. The method of claim 9, wherein, when at least one battery module or battery pack is in an emergency state, information on the emergency state is transmitted to a battery management system of another charging station by the second wireless communication means.

13. The method of claim 12, wherein, when the charging station of the battery management system that has received the emergency state information is in a normal state, the second wireless communication means of the charging station is maintained in a transmission inactive state or a reception standby state.

14. The method of claim 12, wherein, when the charging station of the battery management system that has received the information on the emergency state is in an emergency state, the information on the emergency state is transmitted to the battery management system in another charging station by the second wireless communication means of the charging station.
